# EUROPEAN PATENT APPLICATION

(11) **EP 2 302 203 A1**
(43) Date of publication of application: **30.03.2011**
(21) Application number: 09171404.8
(22) Date of filing: 25.09.2009
(51) Int. Cl.: F03B 13/06, F03B 15/00

(54) **Non rotating hydro-generator**

(71) Applicant: ABB Research Ltd., 8050 Zürich (CH)
(72) Inventor: Dahlgren, Mikael, 724 64, Västerås (SE); Rothman, Bengt, 722 09, Västerås (SE); Russberg, Gunnar, 724 62, Västerås (SE); Zelaya De La Parra, Hector, 722 46, Västerås (SE)
(74) Representative: Kock, Ina

(57) **Abstract**

A hydro electric generator comprising: a switching means (3) having an inlet (6) for receiving flowing water, an outlet (7) for the water, and a first and a second pipe (8,9) for transportation of water, the switching means is arranged to alternately connect the inlet (6) to the first pipe (8) and the outlet (7) to the second pipe (9), and to connect the inlet (6) to the second pipe (9) and the outlet (7) to the first pipe (8), a movable member (2) connected to the first and second pipe in such way that the flow of water from the pipes generates a reciprocating movement of the movable member, and a converter (10) arranged to convert the reciprocating movement of the movable member to electricity. The switching means comprises: a reservoir connected to said inlet, outlet and pipes, and a device (5) arranged rotatable within the reservoir such that the switching means alternately connect the inlet to the first pipe and the outlet to the second pipe, and to connect the inlet to the second pipe and the outlet to the first pipe in response to the rotation of the device.

## Description

### TECHNICAL AREA

The present invention relates generally to a power generator, and more particularly to an electrical power generator assembly for using kinetic energy from a flowing fluid to generate electrical power.

The present invention is expected to be particularly advantageous used in the context of smaller hydro-powered electricity generation.

### TECHNICAL BACKGROUND

Transforming kinetic energy in the flowing of water, from a higher level to a lower level, to mechanical energy by a turbine and then to electrical energy with a generator connected to the turbine is well known in the art.

When the height (and pressure) difference between a higher level water surface and lower level water surface is low, i.e. in the order of a few meters down to a meter or less, the turbine becomes very inefficient. Losses in the turbine increase as the pressure difference decrease. In combination with low flow volumes hydro turbines are not economical below a height difference below 10m.

For small differences in heights, waterwheels have been used by society for millennia but they have disadvantages. E.g. in spite of high efficiency for overflow wheels even for low flow volumes and low difference in height it is from experience point of view not economical to try to produce electricity. It is better to drive a mill or a compressor in a heat-pump.

The publication JP2008133632 describes how to generate a reciprocal motion of a piston using a number of change-over-valves to alternately connect one side of the piston to the high pressure side of water and the other to a low pressure side of water and then changing sides. The efficiency of this arrangement does not decrease, when the pressure difference decrease, as a turbine based hydro generator arrangement. By increasing the diameter of the cylinder and thus the area of the piston, the force of the pressure difference can be amplified and even very small pressure (or height) differences can be used efficiently.

The hydro generator disclosed in JP2008133632 has a number of drawbacks using normal opening and closing valves. First, they are big. A moderately small generator, e.g. 5 kW, using a 2.5 m height difference and a flow of 0.2 m3/s require pipes with a diameter in the order of 30 cm. Large valves are expensive and in addition they have to be opened and closed more often than any normal operation. A reciprocal frequency of 0.2 to 1 Hz requires the valves to be opened or closed 20000 - 80000 times per day. No normal valve is designed to be opened and closed several million times per year.

The valves have to be actuated at reasonably high speed; the opening and closing have to be at least 5-10 times the reciprocal frequency as to minimize the losses and minimize the negative influence of the motion of the flywheel. The energy needed to open and close several large opening and closing valves quickly will be so large that the generator will hardly produce any excess energy.

Another problem of the generator arrangement disclosed in JP2008133632 is that the electricity is generated by a rotating movement and the reciprocal motions have to be transferred to a rotary motion. This is solved by connecting the reciprocal motion via a connecting rod or by gears and leavers to a flywheel. The flywheel is needed to continue the rotating motion at the end points of the reciprocal motion. The opening and closing of valves have to be synchronized with the motion of the flywheel as not to work against the motion of the flywheel.

Furthermore, it is known that these additional mechanical systems, that transfers the reciprocal motion to rotary motion, is adding complexity to the generator and might generate problems and potential failure points during the life time of a generator.

The piping in the disclosed solution is complex and all the bends will generate losses in pressure difference before it can bear on the piston, reducing the efficiency further.

### SUMMARY OF THE INVENTION

An object of the present invention is to provide a hydro electric generator with switching means and a movable member connected to switching means in such way that the flow of water generates a reciprocating movement of the movable member and this movement is converted to electricity.

This object is achieved by the generator as defined in claim 1.

An embodiment of the present invention is a hydro electric generator comprising: a switching means (3) having an inlet (6) for receiving flowing water, an outlet (7) for the water, and a first and a second pipe (8,9) for transportation of water, the switching means is arranged to alternately connect the inlet (6) to the first pipe (8) and the outlet (7) to the second pipe (9), and to connect the inlet (6) to the second pipe (9) and the outlet (7) to the first pipe (8), a movable member (2) connected to the first and second pipe in such way that the flow of water from the pipes generates a reciprocating movement of the movable member, and a converter (10) arranged to convert the reciprocating movement of the movable member to electricity. The switching means comprises: a reservoir connected to said inlet, outlet and pipes, and a device (5) arranged rotatable within the reservoir such that the switching means alternately connect the inlet to the first pipe and the outlet to the second pipe, and to connect the inlet to the second pipe and the outlet to the first pipe in response to the rotation of the device.

In another embodiment of the present invention, the reservoir is surrounded by a cylindrical casing arranged in close fit with said rotatable device (5), thereby defining two separated chambers within the reservoir.

In another embodiment of the present invention, a first of said two chambers is permanently connected to the inlet and a second of said two chamber is permanently connected to the outlet, alternately connect the first chamber to the first pipe and the second chamber to the second pipe, and to connect the first chamber to the second pipe and the second chamber to the first pipe in response to the rotation of the device.

In another embodiment of the present invention, the generator comprises a rotatable shaft arranged symmetrically in said casing and said device is fixedly attached to said shaft.

In another embodiment of the present invention, the rotatable device (5) arranged rotatable within the reservoir comprises an elliptic disc.

In another embodiment of the present invention, the reservoir is cylindrical and said device (5) arranged rotatable within the reservoir comprises a member having two end portions, each covering essentially a respective half of the cross section of the reservoir, and an intermediate portion separating the two end portions axially.

In another embodiment of the present invention, an actuator is arranged force the device (5) to rotate in the reservoir. The actuator can be an electric motor fed by electricity from a grid or fed by electricity generated by generator it self. The actuator can be a hydraulic motor fed by the same water as the generator.

In another embodiment of the present invention, the generator comprises a rotatable shaft arranged off center in said casing and arranged on a rotatable disk that is arranged to rotate around the center of said casing and said device is fixedly attached to said shaft.

In another embodiment of the present invention, the converter (10) comprises an induction device comprising a coil and a movable permanent magnet arranged inside the coil, said permanent magnet is fixedly connected to the movable member (2) to generate a reciprocating movement of the permanent magnet relative the coil.

In another embodiment of the present invention, the converter (10) comprises one or more permanent magnets arranged on the movable member (2) and a multi turn coil is arranged around a vessel (1) where the movable member (2) is arranged.

In another embodiment of the present invention, the movable member (2) is fixedly connected one or more permanent magnets and a coil arranged outside a vessel (1) where the movable member (2) is arranged (or transfers the reciprocating movement to a permanent magnet linear generator arranged outside the cylinder).

Another embodiment of the present invention is a hydro generator system comprising a plurality of hydro-generators according to the present invention and all of them are operating in parallel and out of phase of each other.

The generator is especially well adapted for small or even micro hydro generation with smaller volume flows (e.g. < 1 m3/s) and/or small height differences (e.g. < 10 m) where the installation of a standard turbine installation is not economical and/or practical.

The present invention offers a number of advantages over the prior art. The one rotating valve in the present invention will replace four change-over-valves in the prior art. It reduces the complexity of the switching device and a failure of anyone of the four valves will make the prior art solution unusable. In the prior art the individual valves have to be highly synchronized as to minimize losses whereas in the rotating valve the switching is built in the design and the switching is automatically synchronized.

The rotating valve can handle a very high number of openings and closings that a normal valve would have problem with.

The energy requirement for rotating the device in the rotating valve is much less than the energy needed to open and close the four change-over-valves in the prior art. The energy needed to rotate the device in the rotating valve can be supplied by any type of motor e.g. a electric motor. Another embodiment is to have a hydraulic motor that uses part of the energy in flowing water to rotate the device in the rotating valve.

In another embodiment the hydro electric generator transforms the reciprocating motion directly to electricity by using a linear alternator.

Directly converting the reciprocating motion to electric energy has a number of advantages. The energy conversion is more efficient and the system is simpler with less moving parts. The position and timing of the switch of the direction of water flow is not so important and thereby making the generator more robust against fluctuation in water flow and changes in water pressure. The frequency of switches of the direction of water flow is directly controlled by the rotational speed of the device in the rotating valve. If the water flow through the generator increases, the rotational speed of the valve device can be increased and if the water flow through the generator decreases, the rotational speed of the valve device can be decreased.

In one embodiment, the movable member is the rotor and arranged with at least one permanent magnet. The stator is the coil arranged around the vessel, in which the movable member is moving. This will lead to a very compact system with only two moving pats, the device in the rotating valve and the movable member.

In another embodiment, the movable member is connected to a linear actuator, either off the shelf or a specially designed, by a rigid body e.g. a shaft or connecting rod, and the movement of the movable member generates electricity in the actuator. This embodiment will have lower investment cost since the generator can be bought off the shelf.

Since the electricity generation is not continuous and the voltages and currents are not constant during a cycle the generated electricity has to be at least partially stored or filtered to even out the fluctuations for a system with a single generator. Alternately, a generation system with several generators, previously described, operating in parallel but out of phase.

The electrical current that is generated can be rectified and the output signal is a bipolar DC voltage. The incoming low voltage is converted to outgoing high voltage by the transformer in a switchgear station. A converter or inverter in the switchgear station is used when necessary to converter DC-AC or vice versa.

### BRIEF DESCRIPTION OF THE DRAWINGS

The drawings constitute a part of this specification and include exemplary embodiments to the invention, which may be embodied in various forms.
Fig 1. Shows schematically a non-rotating hydro generator, according to the first embodiment of the invention.
Fig 2-4. Shows schematically different embodiments of the device in the switching means.
Fig 5. Shows schematically a non-rotating hydro generator according to another embodiment of the invention
Fig 6. Shows schematically a non-rotating hydro generator according to another embodiment of the invention
Fig 7. Shows schematically a non-rotating hydro generator according to another embodiment of the invention

### DETAILED DESCRIPTION OF THE DRAWINGS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

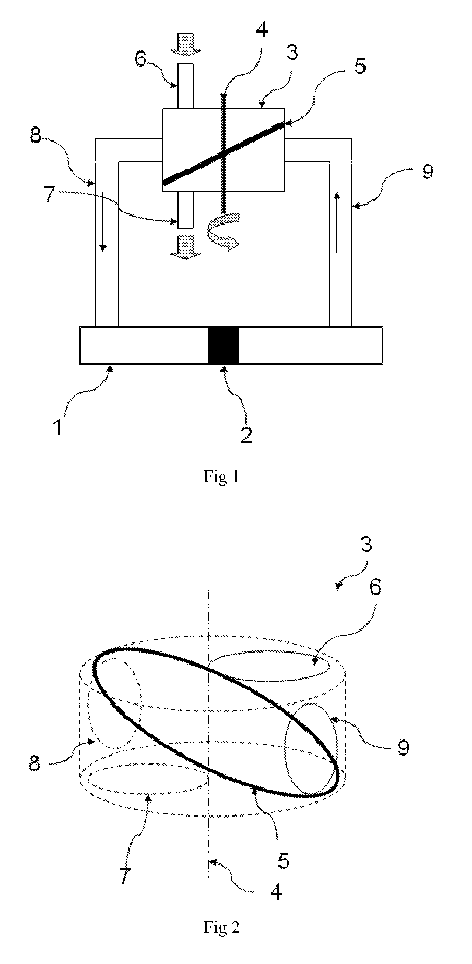

Fig 1. Shows schematically a non-rotating hydro generator, according to the first embodiment of the invention. The flowing water is routed alternately to each side of a movable member 2 by a switching means or rotating valve 3. The rotating valve 3 comprises a reservoir or cylindrical casing, and a rotatable shaft 4 arranged symmetrically in said casing. The rotating valve 3 further comprise a device 5 fixedly attached to the shaft 4 and in close fit with the wall of the reservoir, thereby defining separated chambers within the casing.

At least two pipes functioning as outlet or inlet 8,9 are arranged along the circumference of the casing and at least two axially arranged inlet or outlets 6,7. These axially arranged inlet or outlet are being fixedly connected to each of the two separated chambers that device 5 divides the cylindrical casing in. When the device 5 is rotated, the openings on the circumference 8,9 of the cylindrical casing will alternately be fluidly connected to the inflow 6 and outflow 7.

When the device 5 is arranged as in fig 1 the inflow 6 is connected with the pipe 8 on the circumference. The water is lead by the pipe into the cylinder 1 and the water pressure will move the movable member or piston 2 to the right. When the device 5 has turned 180 deg the inflow 6 is connected with the other pipe 9 on the circumference. The water is lead by the pipe 9 into the cylinder 1 and the water pressure will move the movable member or piston 2 to the left.

Furthermore, a converter (10) arranged to convert the reciprocating movement of the movable member to electricity.

Fig 2 shows one embodiment of the devise in the switching means. In the reservoir the device is a elliptical disk 5 arranged at an angle to the vertical shaft 4. When the disk is rotated the inlet 6 and outlet 7 is alternately connected to one of the pipes 8,9. The advantage of this arrangement is that the height of the reservoir can be minimized.

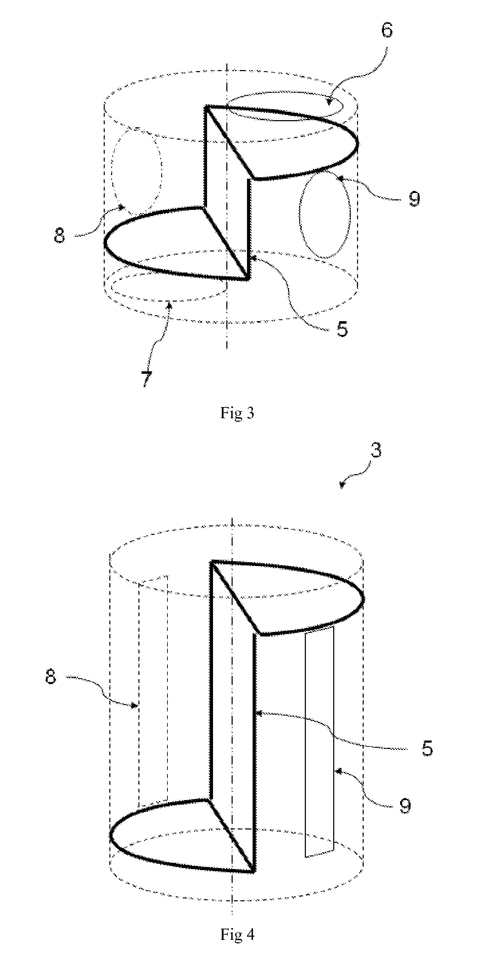

Fig 3 shows another embodiment of the devise in the switching means. The device is having two end portions covering each essentially a respective half of the cross section of the reservoir and an intermediate portion separating the two end portions axially. The advantage of this device is the faster switching and lower losses of water.

A combination of the embodiments in fig 2 and fig 3 is also a possible solution where the two end portions of the devise are halves of an elliptical disk and the intermediate portion separating the two end portions axially have the same height as the pipes.

Fig 4 shows another embodiment of the devise in the switching means for even faster switching. The pipes 8,9 are not round but rectangular with the same surface area as the pipe but with the short side in the radial direction. The middle portion of the device 5 have the same height as the long side of the pipes 8,9 The height of the switching means is higher than the embodiments of fig 2 and 3.

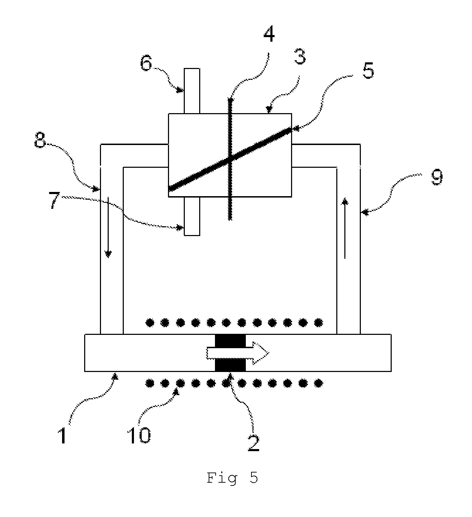

Fig 5 shows an embodiment where the movable member 2 is arranged with permanent magnets and a multi coil is arranged round the container 1 where the movable member 2 is reciprocally moving. By the movement of the permanent magnets a current is generated in the coil 10.

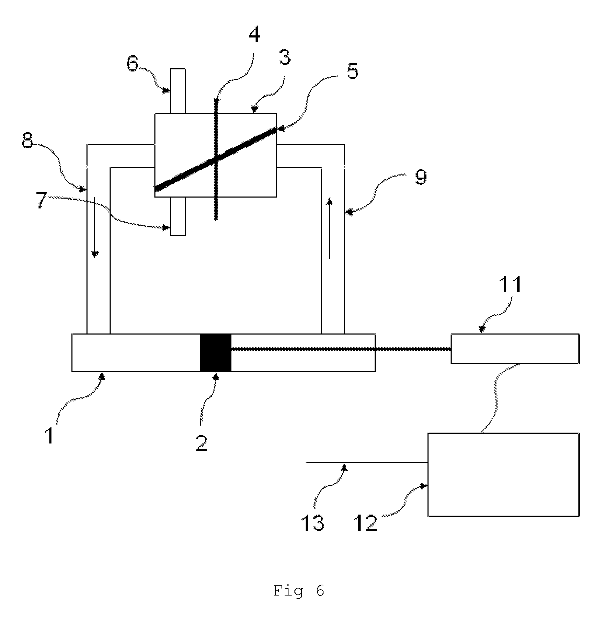

Fig 6 shows an embodiment where the movable member 2 is connected to a shaft that transfers the reciprocating movement to the permanent magnet and a coil arranged outside the vessel and movable member arrangement. This permanent magnet and a coil arrangement could a permanent magnet linear generator.

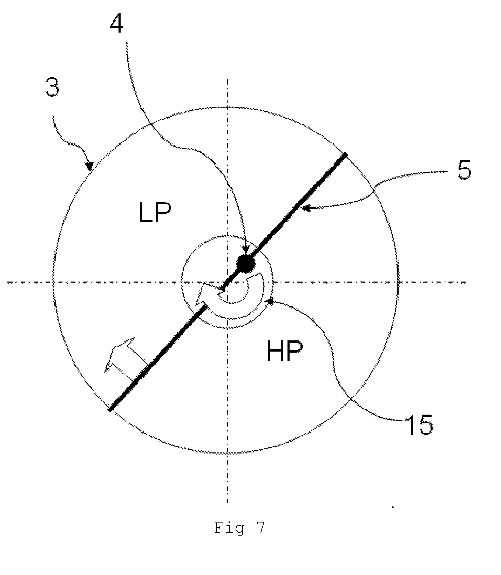

Fig 7 shows another embodiment of the arrangement of the devise in the switching means. The device is attached to a shaft 5 said shaft is attached to rotating disk 15 which rotates around the centerline of the vessel 3. The shaft is attached slightly off center on the disk. The pressure difference between the two chambers (HP high pressure, LP low pressure) drives the disk to rotate and the rotation of the disk is controlled by the rotation of the disk 15.

## Claims

1. A hydro electric generator comprising:
- a switching means (3) having
an inlet (6) for receiving flowing water,
an outlet (7) for the water, and
a first and a second pipe (8,9) for transportation of water,
- the switching means is arranged to alternately connect the inlet (6) to the first pipe (8) and the outlet (7) to the second pipe (9), and to connect the inlet (6) to the second pipe (9) and the outlet (7) to the first pipe (8),
- a movable member (2) connected to the first and second pipe in such way that the flow of water from the pipes generates a reciprocating movement of the movable member, and
- a converter (10) arranged to convert the reciprocating movement of the movable member to electricity,
**characterized in that**
the switching means comprises:
- a reservoir connected to said inlet, outlet and pipes, and
- a device (5) arranged rotatable within the reservoir such that the switching means alternately connect the inlet to the first pipe and the outlet to the second pipe, and to connect the inlet to the second pipe and the outlet to the first pipe in response to the rotation of the device.

2. The generator according to claim 1 wherein said reservoir is surrounded by a cylindrical casing arranged in close fit with said rotatable device (5), thereby defining two separated chambers within the reservoir.

3. The generator according to claim 2 wherein a first of said two chambers is permanently connected to the inlet and a second of said two chamber is permanently connected to the outlet, alternately connect the first chamber to the first pipe and the second chamber to the second pipe, and to connect the first chamber to the second pipe and the second chamber to the first pipe in response to the rotation of the device.

4. The generator according to claim 2 wherein the generator comprises a rotatable shaft arranged symmetrically in said casing and said device is fixedly attached to said shaft.

5. The generator according to claim 1 wherein said rotatable device (5) arranged rotatable within the reservoir comprises an elliptic disc.

6. The generator according to claim 1 wherein said reservoir is cylindrical and said device (5) arranged rotatable within the reservoir comprises a member having two end portions, each covering essentially a respective half of the cross section of the reservoir, and an intermediate portion separating the two end portions axially.

7. A generator according to any of the claims 1-6 wherein an actuator is arranged force the device (5) to rotate in the reservoir.

8. A generator according to claim 7 wherein the actuator arranged force the device (5) to rotate is hydraulic motor driven by the a part of the same flowing water as the generator.

9. A generator according to any of the claims 1-3 wherein the generator comprises a rotatable shaft arranged off center in said casing and arranged on a rotatable disk that is arranged to rotate around the center of said casing and said device is fixedly attached to said shaft.

10. A generator according to any of the claims 1-9 wherein the converter (10) comprises an induction device comprising a coil and a movable permanent magnet arranged inside the coil, said permanent magnet is fixedly connected to the movable member (2) to generate a reciprocating movement of the permanent magnet relative the coil.

11. A generator according to any of the claims 1-10 wherein the converter (10) comprises one or more permanent magnets arranged on the movable member (2) and a multi turn coil is arranged around a vessel (1) where the movable member (2) is arranged.

12. A generator according to any of the claims 1-9 wherein the movable member (2) is fixedly connected one or more permanent magnets and a coil arranged outside a vessel (1) where the movable member (2) is arranged (or transfers the reciprocating movement to a permanent magnet linear generator arranged outside the cylinder).

13. A generator according to any of the claims 1-11 wherein switchgear (e.g. rectifiers, transformers etc.?) is connected to the generator (to "treat" the electricity, wording?).

14. A hydro generator system comprising a plurality of hydro-generators according to claims 1-13, operating in parallel and out of phase.
